Europäisches Patentamt

European Patent Office

Office européen des brevets

(19)

(11) Numéro de publication: **0 263 744**
**B1**

(12) # FASCICULE DE BREVET EUROPEEN

(45) Date de publication du fascicule du brevet:
**04.10.89**

(51) Int. Cl.⁴: **F23Q 7/00**, F02B 19/14

(21) Numéro de dépôt: **87402169.4**

(22) Date de dépôt: **29.09.87**

(54) **Bougie de préchauffage profilée pour moteur à allumage par compression.**

(30) Priorité: **06.10.86 FR 8613871**

(43) Date de publication de la demande:
**13.04.88 Bulletin 88/15**

(45) Mention de la délivrance du brevet:
**04.10.89 Bulletin 89/40**

(84) Etats contractants désignés:
**DE FR GB IT SE**

(56) Documents cités:
**EP-A- 0 154 718**
**DE-A- 3 441 169**
**GB-A- 2 010 392**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Marez, Patrice, 3, rue Alsace Lorraine, F-92250 La Garenne-Colombes(FR)**
Inventeur: **Advenier, Pierre, 35, rue Belliard, F-75018 Paris(FR)**

(74) Mandataire: **Mestre, Jean et al, c/o CABINET LAVOIX 2, place d'Estienne d'Orves, F-75441 Paris Cédex 09(FR)**

ACTORUM AG

## Description

La présente invention concerne les moteurs à allumage par compression dits "Diesel" et, notamment, ceux d'entre eux équipés d'une préchambre de turbulence dite de "Ricardo", et est relative, plus spécialement, à la configuration de la bougie de préchauffage pour de tels moteurs.

Un moteur Diesel à préchambre de Ricardo se compose essentiellement d'un bloc-cylindres contre lequel se trouve placée une culasse dans laquelle est ménagée une préchambre. Cette préchambre est reliée par un canal de transfert à une chambre principale qui est délimitée par la tête du piston, le cylindre et la partie adjacente de la culasse qui est en vis-à-vis du cylindre. Ce canal, de préférence tangentiel, communique avec le chambre principale et avec la préchambre par des embouchures. Dans la préchambre se trouvent placés un injecteur, le plus souvent disposé à l'opposé de l'embouchure du canal, et une bougie qui permet d'assurer l'inflammation du mélange combustible au démarrage du moteur, particulièrement lorsque ce dernier est froid.

Les moteurs Diesel de ce type réalisés jusqu'à présent présentent des inconvénients : la bougie constitue un obstacle aérodynamique qui perturbe le champ de vitesses de l'air, comprimé par le piston, au voisinage de l'injecteur. La combustion s'en trouve dégradée et il en résulte une augmentation des émissions de fumées et d'hydrocarbures imbrûlés.

Pour tenter de remédier aux inconvénients causés par la présence de l'obstacle aérodynamique que constitue la bougie de préchauffage, on a déjà proposé de modifier la position de la bougie dans la préchambre en agissant soit sur sa localisation soit sur sa distance de pénétration dans la préchambre et aussi d'en modifier les dimensions et/ou le nombre.

Parmi ces dernières solutions qui ont trait à la miniaturisation des bougies, on a proposé d'en réduire le diamètre et de leur donner une petite pénétration dans la préchambre ou bien même de seulement faire affleurer la bougie à la paroi de cette dernière. Si ceci contribue quelque peu à réduire la perturbation aérodynamique, ceci diminue très nettement l'efficacité du préchauffage pour le démarrage du moteur à cause de la très petite surface superficielle de l'embout de la bougie qui est mouillée dans la préchambre.

Dans toutes ces solutions, l'embout chauffant de la bougie est toujours cylindrique et à section droite transversale de profil circulaire. C'est par exemple le cas des modes de réalisation exposés dans le document DE-A 3 441 169. Dans ce document pour concentrer et diriger le flux thermique émis par l'élément chauffant d'une bougie de préchauffage, on donne à l'embout cylindrique de celle-ci une configuration superficielle particulière sous forme d'un méplat ou d'un caniveau.

Quelles que soient les solutions proposées de la technique antérieure, aucune de celles-ci ne permet de supprimer les troubles apportés à la turbulence du flux gazeux dans la préchambre. C'est précisément ce que l'invention se propose de réaliser.

L'invention a pour objet une bougie de préchauffage pour moteur à allumage par compression équipé d'une préchambre de turbulence comportant un embout destiné à faire saillie dans la préchambre et caractérisée en ce que cet embout présente une section droite, par un plan oblong et de forme aérodynamique par rapport à un courant gazeux de direction parallèle à l'axe de la plus grande dimension du contour.

La solution selon l'invention a pour avantage que pour une même surface superficielle extérieure mouillée de l'embout, et donc pour une même qualité de démarrage du moteur, la traînée aérodynamique est grandement réduite par diminution du coefficient de traînée et de la surface du "maître-couple", ce qui entraîne une réduction des fumées et des hydro-carbures imbrûlée. Ou bien, pour une même traînée, la surface mouillée est très nettement augmentée et la qualité du démarrage du moteur, notamment à froid, est améliorée.

Selon les modes de réalisation retenus et le profil du contour oblong choisi, on augmente la surface mouillée de la bougie mise en place dans la préchambre, pour une même section droite de la bougie dans l'écoulement ou bien on diminue la section droite dans l'écoulement à surface mouillée constante.

Suivant l'invention, on fait en sorte que ce contour oblong présente un grand axe et que ce grand axe soit un axe de symétrie que l'on rend coplanaire au plan de symétrie habituel de la préchambre. Pour donner et conserver une orientation correcte à la bougie lors de son montage sur le moteur, on équipe le culot de cette dernière de moyens de repérage, s'il y a lieu associés à un détrompeur, de manière que la direction de la plus grande dimension de son contour coïncide avec le plan de symétrie de la préchambre.

D'autres caractéristiques de l'invention apparaîtront à la lecture de la description qui suit et à l'examen du dessin, annexé, donné seulement à titre d'exemple, où :

- la Fig.1 est une vue partielle schématique en coupe d'un moteur Diesel à préchambre de Ricardo selon la technique antérieure ;
- la Fig.2 est une vue partielle de la Fig.1, à échelle différente, d'une projection sur un plan orthogonal à l'axe de translation du piston ;
- les Fig.3A et 3B sont des vues partielles schématiques des écoulements fluides à proximité de l'embout d'une bougie de préchauffage selon la technique antérieure ;
- les Fig.4A à 4D sont des illustrations de différents modes de réalisation du contour oblong de l'embout d'une bougie de préchauffage selon l'invention ;
- les Fig.5A et 5B sont des vues analogues à celles des Fig.3A et 3B mais pour une bougie selon l'invention ; et
- la Fig.6 est une coupe longitudinale partielle par le plan méridien de symétrie d'un mode de réalisation d'une bougie selon l'invention montrant les moyens de repérage de la direction du grand axe du contour oblong de son embout, qui équipent son culot.

Les moteurs Diesel, en particulier ceux équipés d'une préchambre de turbulence de Ricardo, étant bien connus dans la technique, on ne décrira que ce qui se rapporte à l'invention et qui est nécessaire à sa compréhension.

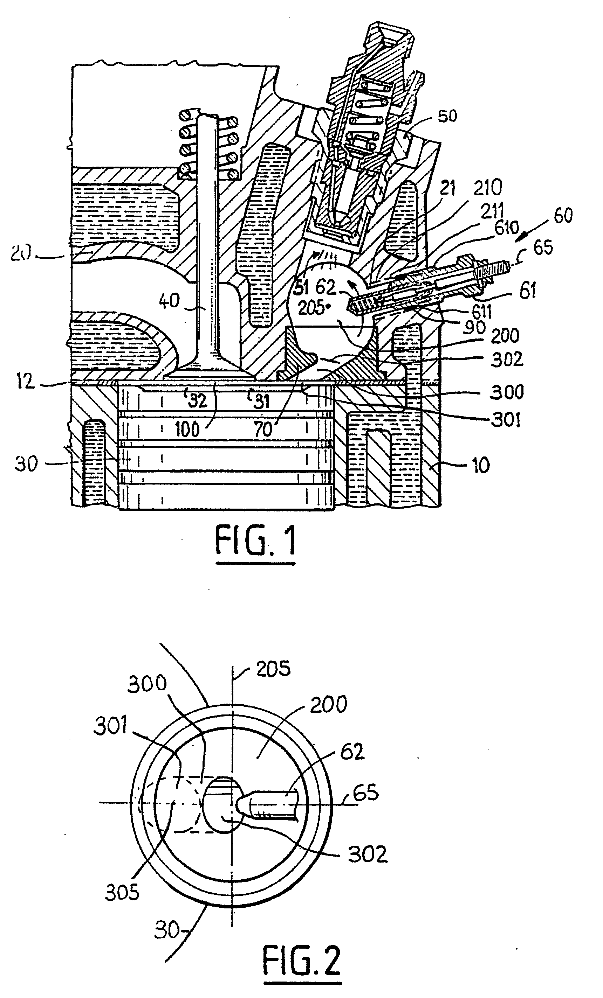

On a représenté sur la Fig.1, un mode de réalisation d'un moteur Diesel à préchambre de Ricardo selon la technique antérieure.

Comme on le voit sur cette coupe schématique partielle, le moteur comprend un bloc-cylindres 10 contre lequel se trouve placée une culasse 20 qui en est séparée par un joint de culasse 12 mécano-plastique. Le bloc-cylindres est équipé d'un piston 30 dont la tête 31 est pourvue d'un évidement 32. Ce moteur est aussi équipé d'une soupape 40, d'un injecteur 50 et d'une bougie de préchauffage 60 utilisée pour le démarrage, en particulier lorsque le moteur est froid. Cette bougie 60, d'axe longitudinal 65, se compose essentiellement d'un culot 61 de montage et d'un embout 62 de préchauffage. Comme il est classique, la culasse 20 est munie d'un élément 70 qui délimite avec cette dernière une préchambre 200.

Dans cette préchambre 200 débouchent l'injecteur 50 et l'embout 62 de la bougie 60. Le culot 61 de la bougie porte un filetage 610 qui permet de la monter sur la culasse 20 en le vissant dans le taraudage 210 d'un alésage 21 percé dans la culasse. L'étanchéité bougie-culasse est assurée par un joint 90 interposé entre un épaulement 611 du culot 61 et un siège 211 de l'alésage 21 de la culasse ; ce joint est partiellement écrasé en fin de vissage de la bougie.

La tête du piston, le cylindre et la partie de la culasse qui leur fait face délimitent une chambre de combustion principale 100.

Cette chambre de combustion principale 100 et la préchambre 200 sont mises en communication par un canal de transfert 300 qui les relie par une embouchure 301 qui s'ouvre dans la chambre 100 et par une embouchure 302 qui s'ouvre dans la préchambre 200.

La préchambre se présente généralement comme une cavité délimitée par une partie supérieure habituellement sphérique raccordée à une partie inférieure souvent tronconique, comme cela apparaît à l'examen du dessin. Cette partie inférieure est le plus souvent aménagée dans un élément 70 indépendant de la culasse qui est rapporté sur cette dernière.

La Fig.2 permet de voir la configuration du canal de transfert 300 et les positions respectives qu'occupent les embouchures 301, 302 et l'embout 62 de la bougie 60 dans la préchambre 200. La préchambre présente un plan de symétrie, le plan de coupe de la Fig.1 qui sur la Fig.2 a une trace confondue avec l'axe longitudinal 65 de la bougie et l'axe longitudinal 305 du canal de transfert.

Le canal de transfert arrivant tangentiellement dans la préchambre, le fluide qui s'y déplace est animé de mouvements tourbillonnaires selon un axe 205 qui passe pratiquement par le centre de la partie sphérique de la préchambre, axe qui est perpendiculaire au plan de la Fig.1. L'examen des Fig.1 et 2 permet de comprendre immédiatement que la bougie 60 dont l'embout de préchauffage 62 fait saillie dans la cavité de la préchambre 200 constitue un obstacle qui perturbe l'aérodynamisme et le champ de vitesses au voisinage de l'injecteur ; le jet 51 de carburant pulvérisé est grandement perturbé ce qui nuit à une bonne combustion, comme on l'a indiqué.

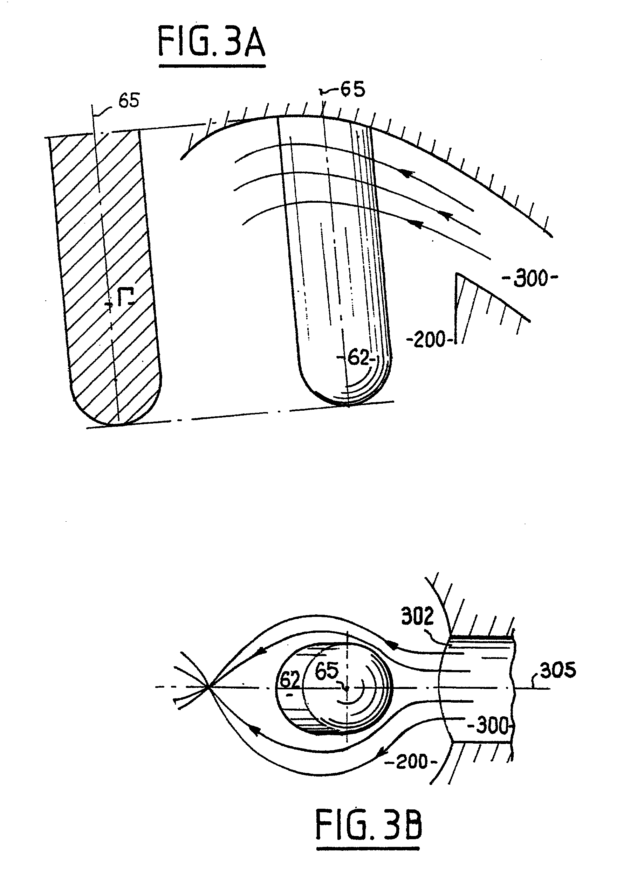

Les Figs.3A et 3B illustrent l'écoulement du fluide à la sortie du canal de transfert au voisinage de l'embout de la bougie qui pénètre dans la préchambre. Ces figures sont des vues partielles à grande échelle qui correspondent respectivement aux vues des Fig.1 et 2. La partie hachurée de la Fig.3A représente la section droite ou "maître-couple" $\tau$ de l'embout chauffant cylindrique de la bougie selon la technique antérieure dans l'écoulement, par un plan longitudinal pratiquement perpendiculaire à la direction d'écoulement.

On voit donc clairement illustrées en particulier sur la Fig.3B, les perturbations apportées par une bougie cylindrique de la technique antérieure dont la section droite par un plan perpendiculaire à son axe longitudinal 65 présente un contour circulaire.

Pour faciliter la compréhension de l'invention, on conserve dans toute la description et les revendications les mêmes numéros de référence pour repérer des parties qui jouent des rôles similaires.

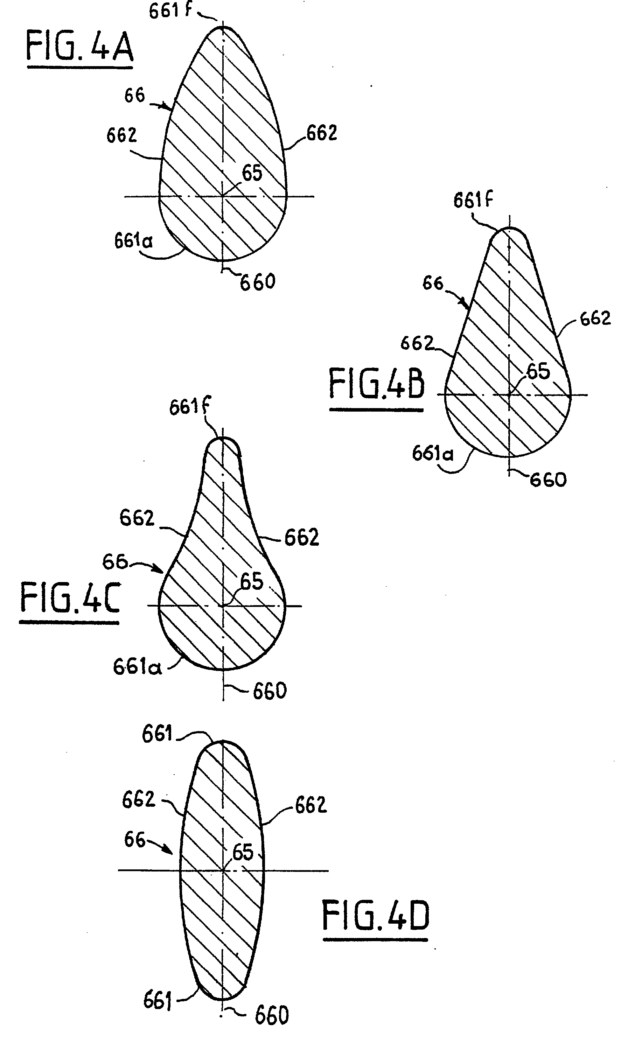

Selon l'invention, on donne à l'embout 62 chauffant de la bougie une section droite, par un plan perpendiculaire à son axe longitudinal 65, de contour oblong 66. Comme on le voit sur les Fig.4A à 4D, ce contour oblong de l'embout chauffant de la bougie de préchauffage peut revêtir différents profils. Comme on l'observera sur les différentes vues de la Fig.4, ce contour oblong présente toujours un grand axe 660 et on fait en sorte que ce grand axe soit aussi un axe de symétrie.

Comme on le notera sur les Fig.4A à 4C, ce contour oblong comprend deux arcs opposés 661a et 661f délimitant la plus grande dimension de son contour et deux lignes opposées 662 qui délimitent sa dimension plus petite, selon une direction orthogonale au grand axe 660, et se raccordent tangentiellement à ces deux arcs. Sur ces Fig. 4A à 4C ces deux arcs 661 sont convexes vers l'extérieur de l'embout 62 et présentent des rayons de courbure inégaux alors que sur la Fig.4D, ces rayons de courbure sont égaux. Comme on peut l'observer sur les Fig.4A à 4D, les deux lignes 662 opposées qui délimitent la dimension plus petite du contour oblong de l'embout chauffant de la bougie sont des segments curvilignes (Fig.4A, 4C et 4D) convexes vers l'extérieur de l'embout (Fig.4A, 4D) ou concaves (Fig.4C). Dans le mode de réalisation de la Fig.4B, ces segments sont rectilignes.

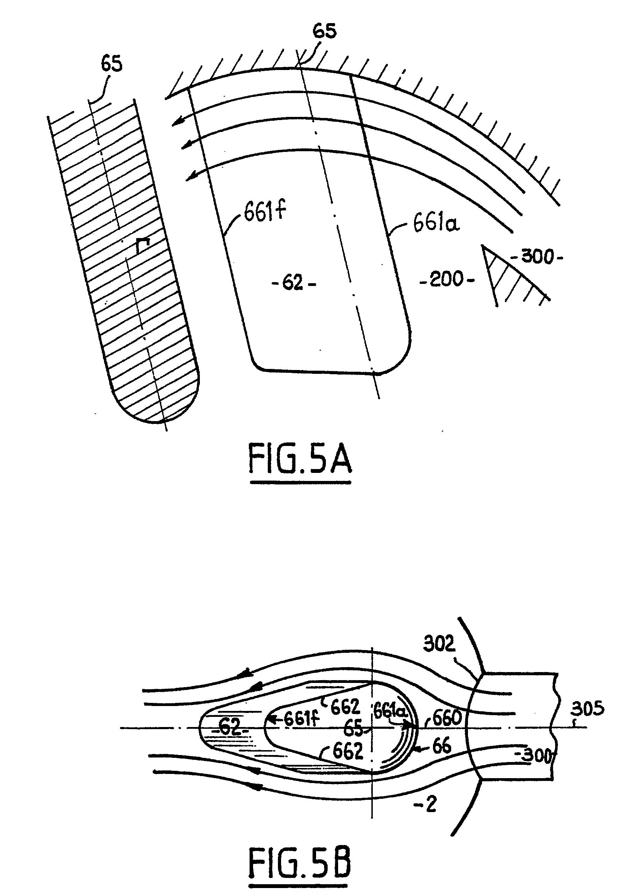

Une telle bougie est montée sur la culasse du moteur de manière que son embout 62 de préchauffage pénètre dans la préchambre 200. Sur les Fig.5A et 5B, qui correspondent à celles des Fig.3A et 3B, on a représenté l'écoulement du fluide autour de l'embout de préchauffage d'une bougie selon l'invention dont le contour est conforme à la section de la Fig.4B.

Comme on peut l'y constater, la turbulence y est bien moindre du fait de la diminution du coefficient de traînée. Dans le cas où les rayons de courbure des arcs 661 sont inégaux, on place par exemple ce-

lui 661a de plus grand rayon de courbure dans la préchambre 200 de manière qu'il soit rencontré le premier par l'écoulement ; cet arc 661a joue alors dans ce cas le rôle d'un bord d'attaque, ou bord amont, par rapport au sens d'écoulement, alors que l'autre arc 661f de petit rayon de courbure joue le rôle de bord de fuite, ou bord aval.

Grâce à l'invention, on voit donc qu'on a amélioré l'aérodynamisme dans la préchambre qui était auparavant très fortement perturbé par le profil du contour de la section droite des bougies selon la technique antérieure.

La bougie selon l'invention, est placée sur le moteur de manière à présenter un bord d'attaque et un bord de fuite qui donnent le coefficient de traînée minimal.

Comme indiqué précédemment, on peut augmenter la surface extérieure mouillée de la bougie dans la préchambre en conservant sa section droite ou "maître-couple" $\tau$ constant dans l'écoulement ou bien, au contraire, conserver la surface mouillée constante et réduire alors sa section droite ou "maître-couple" $\tau$ dans l'écoulement.

On place la bougie 60 dans le moteur de manière que le grande axe 660 de son contour 66, qui est aussi un axe de symétrie du profil, soit confondu avec le plan de symétrie 305 de la préchambre 200. Pour ce faire, il faut modifier le montage de la bougie sur la culasse. En effet, un simple vissage dans la culasse, suffisant pour comprimer de manière satisfaisante le joint d'étanchéité bougie-culasse ne permet pas d'obtenir une orientation déterminée certaine d'un embout profilé suivant l'invention dans la préchambre ; l'orientation finale en fin de serrage est aléatoire car fonction à la fois du taux d'écrasement du joint et des positions relatives des entrées des filets de l'alésage taraudé et du filetage tant entre elles que par rapport à la culasse et au culot.

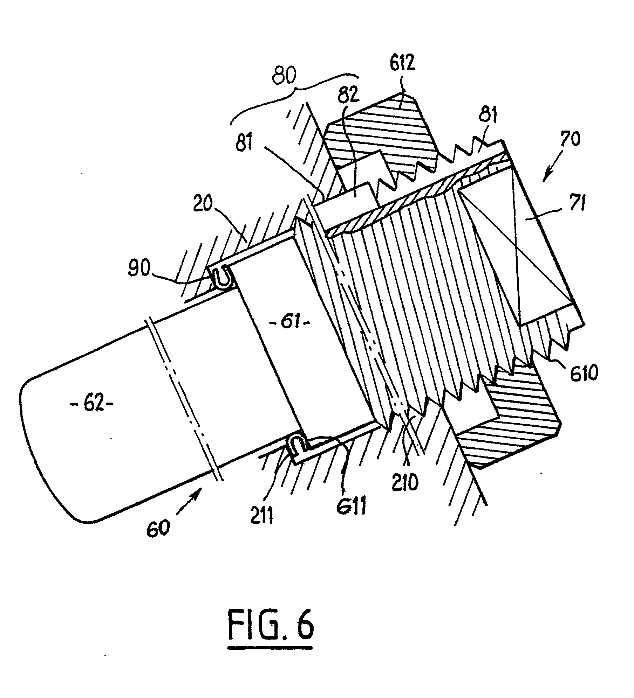

Comme on le voit sur la Fig.6, on utilise alors un contre-écrou 612 que l'on visse sur le filetage 610 du culot 61 et que l'on serre contre une face d'appui usinée, non référencée, de la culasse après avoir repéré et orienté la bougie selon l'invention pour qu'elle soit dirigée dans l'écoulement par exemple comme indiqué et illustrée sur les Fig.5A et 5B comprimant le joint 90 à la fin du vissage. Pour ce faire, selon l'invention on équipe le culot 61 de moyens de repérage 70 qui sont, par exemple, constitués par deux méplats 71 usinés sur la partie portant le filetage du culot 61, par exemple parallèlement ou perpendiculairement au plan de symétrie de l'embout 62 de la bougie qui contient le grande axe 660 du profil 66. En outre, dans le cas de profils en "goutte d'eau", c'est-à-dire quand les rayons de courbure des arcs 661 sont différents (Fig.4A à 4C), il faut orienter la bougie de manière à ce que par exemple l'arc 661a de grand rayon de courbure soit dirigé pour servir de bord d'attaque, par exemple placé à l'aplomb de l'embouchure 302 du canal de transfert 300, comme cela est illustré sur la Fig.5B en particulier. Ce repérage peut être assuré, par exemple, à l'aide d'un point ou tout autre signe, marque ou repère associé par exemple au méplat 71 qui est situé dans ce cas du côté de l'arc 661a à grand rayon de courbure, qui constitue le bord d'atta-que de la bougie. Il est clair que ce repère peut tout aussi bien signaler l'arc opposé à petit rayon de courbure. Des repères correspondants, ou analogues, peuvent être, bien sûr, ménagés sur la culasse. Tous ces moyens de repérage sont détectables de l'extérieur

Selon une autre variante de réalisation, on utilise un détrompeur 80. Par exemple, ce détrompeur est constitué de deux gorges 81 pratiquement demi-cylindriques ménagées l'une dans la culasse 20 et l'autre dans le culot 61 de la bougie et dans lesquelles on engage entre cuir-et-chair une goupille 82 lorsque la bougie est vissée jusqu'à la position requise donnant l'étanchéité nécessaire par écrasement du joint 90; puis on l'immobilise s'il y a lieu, à l'aide d'un contre-écrou 612 qui présente un dégagement approprié pour le passage de la goupille 82 ; cette goupille doit dépasser de la culasse, une fois mise en place, de manière à pouvoir être extraite pour permettre le dévissage de la bougie. On voit donc que ce détrompeur est constitué d'éléments mâle et femelle coopérant de profils propres complémentaires qui sont associés à la bougie, en particulier à son culot, et au moteur.

L'étanchéité entre le culot de la bougie et la culasse est assurée par un joint 90 à forte capacité de déformation axiale par exemple un joint torique à section droite en $\underline{C}$, bien connu dans la technique. Le joint 90 est interposé entre le siège 211 de la culasse et l'épaulement 611 du culot 61 de la bougie selon l'invention.

Dans ce qui précède, on a décrit la mise en oeuvre d'une bougie selon l'invention en lui donnant une orientation selon laquelle c'est son arc 66a de plus grand rayon qui joue le rôle de bord d'attaque ou bord amont par rapport au sens de l'écoulement. Il est clair que cette orientation peut être inversée afin que ce soit l'arc 661 $\underline{f}$ de plus petit rayon qui serve de bord d'attaque ou bord amont. Ceci ne modifie pas l'action proprement dite de la bougie selon l'invention sur la turbulence de l'écoulement mais seulement l'ampleur de l'action. L'une et l'autre des deux orientations possibles sont utilisables.

## Revendications

1. Bougie (60) de préchauffage pour moteur à allumage par compression équipé d'une préchambre de turbulence (200), comportant un culot (61) et un embout (62) destiné à faire saillie dans la préchambre (200), caractérisée en ce que cet embout (62) présente une section droite, par un plan perpendiculaire à son axe longitudinal, de contour (66) oblong et de forme aérodynamique par rapport à un courant gazeux de direction parallèle à l'axe (660) de la plus grande dimension du contour.

2. Bougie selon la revendication 1, caractérisée en ce que ce contour oblong (66) présente un grand axe (660) et en ce que ce grand axe est un axe de symétrie.

3. Bougie selon la revendication 1 ou 2, caractérisée en ce que ce contour oblong (66) comprend deux arcs opposés (661) qui délimitent la plus grande de ses dimensions et deux lignes opposées (662) qui délimitent sa dimension plus petite et se raccordent tangentiellement à ces deux arcs (661).

4. Bougie selon la revendication 3, caractérisée en ce que ces deux arcs (661) sont convexes vers l'extérieur de l'embout et présentent des rayons de courbures égaux.

5. Bougie selon la revendication 3, caractérisée en ce que ces deux deux arcs (661a, 661f) sont convexes vers l'extérieur de l'embout et présentent des rayons de courbure inégaux.

6. Bougie selon l'une quelconque des revendications 3 à 5, caractérisée en ce que ces deux lignes opposées (662) sont des segments rectilignes.

7. Bougie selon l'une quelconque des revendications 3 à 5, caractérisée en ce que ces deux lignes opposées (662) sont des segments curvilignes.

8. Bougie selon la revendication 7, caractérisée en ce que ces segments curvilignes (662) sont convexes vers l'extérieur de l'embout.

9. Bougie selon la revendication 7, caractérisée en ce que ces segments curvilignes (662) sont concaves vers l'extérieur de l'embout.

10. Bougie selon l'une quelconque des revendications 1 à 9, caractérisée en ce que, lorsqu'elle est mise en place dans le moteur, elle est orientée de manière que le grand axe (660) de son contour oblong (66) soit pratiquement parallèle à la direction de l'écoulement du mélange gazeux pendant la compression.

11. Bougie selon l'une quelconque des revendications 1 à 10 pour un moteur dont la préchambre (200) présente un plan de symétrie (305), caractérisée en ce que, lorsqu'elle est mise en place dans cette préchambre (200), elle est orientée de manière que le plus grand axe (660) de son contour (66) soit pratiquement contenu dans ce plan de symétrie (305).

12. Bougie selon l'une quelconque des revendications 1 à 11, caractérisée en ce que son culot (61) porte des moyens de repérage (70) de la direction du grand axe (660) de son contour (66) et s'il y a lieu de celui de ses arcs (661) qui sert de bord d'attaque détectables de l'extérieur.

13. Bougie selon la revendication 12, caractérisée en ce que ces moyens de repérage (70) comprennent au moins un méplat (71) ménagé sur le culot (61).

14. Bougie selon la revendication 13 dont le culot (61) porte un filetage (610) pour son montage sur le moteur, caractérisée en ce que ces moyens de repérage (70) comprennent deux méplats (71) ménagés sur la partie du culot qui porte le filetage (610).

15. Bougie selon la revendication 13 ou 14, caractérisée en ce que le plan du méplat est parallèle au plus grand axe (660) du contour (66).

16. Bougie selon l'une quelconque des revendications 12 à 15, caractérisée en ce que ces moyens de repérage (70) comprennent un détrompeur (80).

17. Bougie selon la revendication 16, caractérisée en ce que ce détrompeur (80) comprend des éléments mâle (82) et femelle (81) de profils propres complémentaires qui sont associés à la bougie et en particulier à son culot et au moteur.

18. Bougie selon l'une quelconques des revendications 1 à 17 dont le culot (61) porte un filetage (610) et présente un épaulement (611), caractérisée en ce que ce filetage est destiné à recevoir un contre-écrou (612) pour l'immobilisation de la bougie correctement orientée sur le moteur et en ce que cet épaulement (611) est destiné à servir d'appui pour comprimer un joint torique (90) d'étanchéité à forte capacité de déformation notamment à section droite en $\underline{C}$.

**Patentansprüche**

1. Vorwärmkerze (60) für luftverdichtende Brennkraftmaschinen mit einer Wirbelvorkammer (200), bestehend aus einem Sockel (61) und einem Kopf (62), der in die Vorkammer (200) hineinragen soll, dadurch gekennzeichnet, daß der Kopf (62) in einer zu seiner Längsachse senkrechten Ebene einen Querschnitt mit einem länglichen Umriß (66) mit einer bezüglich eines zur Achse (660) der größten Abmessung des Umrisses parallelen Gasstroms aerodynamischen Form besitzt.

2. Kerze nach Anspruch 1, dadurch gekennzeichnet, daß der längliche Umriß (66) eine große Achse (660) besitzt und daß diese große Achse eine Symmetrieachse ist.

3. Kerze nach Anspruch 1 oder 2, dadurch gekennzeichnet, daß der längliche Umriß (66) aus zwei einander entgegengesetzten Bögen (661), die seine größte Abmessung abgrenzen, und zwei einander entgegengesetzten Linien (662) besteht, die seine kleinste Abmessung abgrenzen und tangential an die beiden Bögen (661) anschließen.

4. Kerze nach Anspruch 3, dadurch gekennzeichnet, daß die beiden Bögen (661) auf das Äußere des Kopfs zu konvex sind und gleich große Krümmungsradien besitzen.

5. Kerze nach Anspruch 3, dadurch gekennzeichnet, daß die beiden Bögen (661a, 661f) auf das Äußere des Kopfs zu konvex sind und ungleich große Krümmungsradien besitzen.

6. Kerze nach einem der Ansprüche 3 bis 5, dadurch gekennzeichnet, daß die beiden einander entgegengesetzten Linien (662) geradlinige Abschnitte sind.

7. Kerze nach einem der Ansprüche 3 bis 5, dadurch gekennzeichnet, daß die beiden einander entgegengesetzten Linien (662) gekrümmte Abschnitte sind.

8. Kerze nach Anspruch 7, dadurch gekennzeichnet, daß die gekrümmten Abschnitte (662) auf das Äußere des Kopfes zu konvex sind.

9. Kerze nach Anspruch 7, dadurch gekennzeichnet, daß die gekrümmten Abschnitte (662) auf das äußere des Kopfs zu konkav sind.

10. Kerze nach einem der Ansprüche 1 bis 9, dadurch gekennzeichnet, daß sie nach Montage in dem Motor so ausgerichtet ist, daß die große Achse (660) ihres länglichen Umrisses (66) praktisch parallel zu der Richtung der Strömung des Gasgemisches während der Kompression ist.

11. Kerze nach einem der Ansprüche 1 bis 10 für einen Motor, dessen Vorkammer (200) eine Symmetrieebene (305) besitzt, dadurch gekennzeichnet, daß sie nach Montage in der Vorkammer (200) so ausgerichtet ist, daß die größere Achse (660) ihres Umrisses praktisch in dieser Symmetrieebene (305) liegt.

12. Kerze nach einem der Ansprüche 1 bis 11, dadurch gekennzeichnet, daß ihr Sockel (61) von au-

ßen erkennbare Einrichtungen (70) zur Markierung der Richtung der großen Achse (660) ihres Umrisses (66) und gegebenenfalls zur Markierung ihres als Vorderkante dienenden Bogens (661) aufweist.

13. Kerze nach Anspruch 12, dadurch gekennzeichnet, daß die Markierungseinrichtungen (70) aus mindestens einer auf dem Sockel (61) vorgesehenen Abflachung (71) bestehen.

14. Kerze nach Anspruch 13, deren Sockel (61) ein Außengewinde (610) für ihre Montage auf dem Motor besitzt, dadurch gekennzeichnet, daß die Markierungseinrichtungen (70) aus zwei Abflachungen (71) bestehen, die auf dem das Außengewinde (610) tragenden Teil des Sockels vorgesehen sind.

15. Kerze nach Anspruch 13 oder 14, dadurch gekennzeichnet, daß die Ebene der Abflachung zu der größeren Achse (660) des Umrisses (66) parallel ist.

16. Kerze nach einem der Ansprüche 13 bis 15, dadurch gekennzeichnet, daß die Markierungseinrichtungen (70) eine Unverwechselbarkeitseinrichtung (80) besitzen.

17. Kerze nach Anspruch 16, dadurch gekennzeichnet, daß die Unverwechselbarkeitseinrichtung (80) aus einem Einsteckelement (82) und einem Aufnahmeelement (81) bestehen, die einander ergänzende Profile haben und der Kerze, insbesondere ihrem Sockel, und dem Motor zugeordnet sind.

18. Kerze nach einem der Ansprüche 1 bis 17, deren Sockel (61) ein Außengewinde (610) und eine Schulter (611) aufweist, dadurch gekennzeichnet, daß das Außengewinde zur Aufnahme einer Gegenmutter (612) zur Blockierung der auf dem Motor korrekt ausgerichteten Kerze dient und daß die Schulter (611) als Auflagefläche zur Komprimierung einer Runddichtung (90) insbesondere mit C-förmigem Querschnitt, die ein hohes Verformungsvermögen besitzt, dient.

## Claims

1. Preheating plug (60) for air-compressing engines, equipped with a turbulence prechamber (200), comprising a bottom portion (61) and a tip (62) intended to project into the prechamber (200), characterised in that this tip (62) has a cross-section, through a plane perpendicular to its longitudinal axis, which is oblong in contour (66) and aerodynamically shaped with respect to a current of gas directed parallel to the axis (660) of the largest dimension of the contour.

2. Plug according to claim 1, characterised in that this oblong contour (66) has a long axis (660) and this long axis is an axis of symmetry.

3. Plug according to claim 1 or 2, characterised in that this oblong contour (66) comprises two opposing arcs (661) which define the largest of its dimensions and two opposing lines (662) which define its smallest dimension and are tangentially connected to these two arcs (661).

4. Plug according to claim 3, characterised in that these two arcs (661) are convex towards the outside of the tip and have equal radii of curvature.

5. Plug according to claim 3, characterised in that these two arcs (661a, 661f) are convex towards the outside of the tip and have different radii of curvature.

6. Plug according to any one of claims 3 to 5, characterised in that these two opposing lines (662) are straight segments.

7. Plug according to any of claims 3 to 5, characterised in that these two opposing lines (662) are curved segments.

8. Plug according to claim 7, characterised in that these curved segments (662) are convex towards the outside of the tip.

9. Plug according to claim 7, characterised in that these curved segments (662) are concave towards the outside of the tip.

10. Plug according to any one of claims 1 to 9, characterised in that, when it is put into position in the motor, it is oriented so that the long axis (660) of its oblong contour (66) is substantially parallel to the direction or flow of the mixture of gases during compression.

11. Plug according to any one of claims 1 to 10 for a motor the prechamber (200) of which has a plane of symmetry (305) characterised in that, when it is put into position in this prechamber (200), it is oriented so that the longer axis (660) of its contour (66) is substantially contained in this plane of symmetry (305).

12. Plug according to any one of claims 1 to 11, characterised in that its bottom portion (61) comprises means for locating (70) the direction of the long axis (660) of its contour (66) and, if necessary, that arc (661) which serves to a leading edge which can be detected from outside.

13. Plug according to claim 12, characterised in that these locating means (70) comprise at least one planar portion (71) formed on the bottom portion (61).

14. Plug according to claim 13, the bottom portion (61) of which has a thread (610) for its assembly on the engine, characterised in that these locating means (70) comprise two planar portions (71) formed on the part of the bottom portion which carries the thread (610).

15. Plug according to claim 13 or 14, characterised in that the planar portion is parallel to the longest axis (660) of the contour (66).

16. Plug according to any of claims 12 to 15, characterised in that these locating means (70) comprise a corrector (80).

17. Plug according to claim 16, characterised in that this corrector (80) has male and female elements (82) and (81), respectively, having complementary profiles, which are associated with the plug and particularly with its bottom portion and with the engine.

18. Plug according to any one of claims 1 to 17, the bottom portion (61) of which has a thread (610) and a shoulder (611), characterised in that this thread is intended to receive a lock nut (612) for immobilising the plug once it is correctly aligned on the engine and this shoulder (611) is intended to serve as an abutment for compressing a toroidal sealing joint with a high capacity for deformation and particularly having a C-shaped cross-section.

## FIG. 1

## FIG.2

# FIG. 3A

# FIG. 3B

FIG.4A

661 f

66

662          662

65

661a

660

FIG.4B

661f

66

662          662

65

661a

660

FIG.4C

661f

662          662

66

65

661a

660

FIG.4D

661

662          662

66

65

661

660

FIG.5A

FIG.5B

## FIG. 6